# EUROPÄISCHE PATENTSCHRIFT

(11) **EP 2 142 394 B1**
(45) Veröffentlichungstag und Bekanntmachung des Hinweises auf die Patenterteilung: **13.07.2011**
(21) Anmeldenummer: 07822446.6
(22) Anmeldetag: 09.11.2007
(51) Int. Cl.: B60J 10/06

(54) **FÜHRUNGSANORDNUNG FÜR EINE BEWEGBARE FENSTERSCHEIBE EINES KRAFTFAHRZEUGS**
GUIDE ARRANGEMENT FOR A MOVABLE WINDOW PAN OF A MOTOR VEHICLE
SYSTÈME DE GUIDAGE POUR VITRE MOBILE D'UN VÉHICULE AUTOMOBILE

(30) Priorität: 10.11.2006 DE 102006053095
(43) Veröffentlichungstag der Anmeldung: 13.01.2010
(73) Patentinhaber: Metzeler Automotive Profile Systems GmbH, 88131 Lindau/Bodensee (DE)
(72) Erfinder: KRAUSE, Fritz, 88145 Hergatz (DE)
(74) Vertreter: Schober, Christoph D.
(86) Internationale Anmeldenummer: PCT/EP2007/062158
(87) Internationale Veröffentlichungsnummer: WO 2008/055982

(56) Entgegenhaltungen:
- EP-A- 0 308 377
- EP-A- 0 432 590
- EP-A- 1 464 524
- DE-B1- 2 809 721
- US-A- 5 054 242

## Beschreibung

Die Erfindung betrifft eine Führungsanordnung für wenigstens eine bewegbare Fensterscheibe, insbesondere einer Fensterscheibe eines Kraftfahrzeugs. Die Erfindung bezieht sich ferner auf ein Verfahren zur Montage einer solchen Führungsanordnung.

Kraftfahrzeuge weisen häufig Türen auf, die mit einer heb- und senkbaren Fensterscheibe ausgestattet sind. Zur Führung und Abdichtung einer solchen Fensterscheibe sind üblicherweise Dichtungsanordnungen vorgesehen, die mehrere elastische Dichtlippen aufweisen. Beim Hochfahren der Fensterscheibe wird diese durch die in den Seitenbereichen der Fensteröffnung an dem Türrahmen befestigte Dichtung mit einem gewissen Spiel geführt. Ferner ist es bekannt auf der Außenseite der Dichtung eine Zierleiste vorzusehen, der dazu dient, der Dichtungsanordnung ein in ästhetischer Hinsicht ansprechendes optisches Erscheinungsbild zu verleihen.

Bei derartigen Dichtungsanordnungen hat es sich als nachteilig erwiesen, dass bei geschlossener Stellung der Fensterscheibe im Bereich des oberen Endes der Fensterscheibe im Übergang zu dem Dachrahmen ein Überstand vorhanden ist, wobei sich zwischen der Ebene der Außenfläche der Fensterscheibe und der Ebene der äußeren Kante des Dachrahmens oder des zugehörigen Dichtprofils ein Abstand von bis zu einem Zentimeter oder mehr ergibt. Ein solcher Überstand ergibt sich insbesondere bei so genannten rahmenlosen Türen, dass heißt bei Türen, die keinen oberen horizontalen Türrahmen aufweisen.

DE 35 22 811 A1 offenbart eine Scheibenführung, bei der zur Führung der Seitenscheiben in Absenkrichtung im Bereich der B-Säule jeweils ein Befestigungsschenkel einer U-förmigen Führungsschiene auf die Innenseiten der zugeordneten Seitenscheiben aufgeklebt ist. Ein auskragender Führungsschenkel der Führungsschiene greift in eine Nut einer scheibenrahmenseitig angeordneten Aufnahmeschiene ein. Ferner betrifft die DE 33 20 157 A1 eine Glasscheibe mit einem daran angeklebten metallischen Halteelement in Form einer Halte-/Führungsschiene mit zwei U-förmigen Profilen. Der Schenkel des U-förmigen Profils ist mit der Oberfläche der Glasscheibe mit einer Klebemasse verklebt.

Weiterhin offenbart DE 10 2005 053 572 A1 eine Vorrichtung zum seitlichen Führen oder Halten einer verstellbaren Scheibe einer Kraftfahrzeugtür mit einer am Türrahmen angeordneten Dichtung, an welcher die Scheibe zu liegen kommt. An einem seitlichen Endabschnitt der Scheibe ist zumindest bereichsweise ein im Wesentlichen in Verstellrichtung der Scheibe verlaufendes Profilelement angeordnet, das zum Führen oder Halten der Scheibe mit einer Führungsnut der Dichtung in Eingriff steht. Hierbei ist zur Festlegung des Profilelements als weiteres Bauteil eine Profilschiene erforderlich, so dass eine aufwändige Montage erforderlich ist.

Eine Führungsanordnung für eine bewegbare Fensterscheibe eines Kraftfahrzeugs wird ferner in EP 1 464 524 A2 beschrieben. Wie insbesondere die Figuren 8 und 9 zu erkennen geben, weist die Führungsanordnung Führungsschienen, die an der Karosserie des Kraftfahrzeugs befestigt sind, sowie Gleitschienen auf. Die Gleitschienen sind in den Führungsschienen geführt und derart in den Führungsschienen aufgenommen, dass die Fensterscheibe und eine sich entlang einer Stirnfläche der Fensterscheibe erstreckende Zierleiste in einer Ebene liegen.

Ein Dichtungssystem für eine bewegbare Fensterscheibe eines Kraftfahrzeugs wird in US 5,054,242 A beschrieben. Wie insbesondere die Figuren 4 und 10 zu erkennen geben, umfasst das Dichtungssystem eine Führungsanordnung zur Führung der Fensterscheibe, die ein Führungsteil und eine Aufnahme für das Führungsteil aufweisen. Das Führungsteil ist an der Fensterscheibe angeklebt. Zur Abdichtung der Führungsanordnung sind innerhalb der Aufnahme Dichtlippen angeordnet, die beidseitig an dem Führungsteil anliegen.

Eine Scheibenführung in einem Fahrzeug wird in DE 28 09 721 B1 beschrieben. Die Scheibenführung weist ein Führungsteil und eine Aufnahme auf. Die Scheiben werden in der Scheibenführung derart geführt, dass sie nach auβen hin eine Ebene bilden. Zur Abdichtung der Scheibenführung ist zwischen den sich einander gegenüberliegenden Stirnflächen der Scheiben eine Dichtung angeordnet.

Der Erfindung liegt die **Aufgabe** zugrunde, unter Gewährleistung einer einfachen Montage der Führungsanordnung einen bündigen Übergang zwischen den Randbereichen einer Fensterscheibe und den die Fensterscheibe umgebenden mit einer Dichtung versehenden Rahmen zu schaffen.

Diese Aufgabe wird durch eine Führungsanordnung gemäß Anspruch 1 und ein Verfahren zur Montage einer Führungsanordnung gemäß Anspruch 12 gelöst.

Die erfindungsgemäße Führungsanordnung umfasst zwei bewegbare Fensterscheiben, die jeweils eine Außenfläche, eine Innenfläche und eine Stirnfläche aufweisen. Die Fensterscheiben erstrecken sich im Wesentlichen in einer Ebene, so dass die Stirnflächen der Fensterscheiben einander gegenüberliegend und in einem Abstand voneinander angeordnet sind. Die Führungsanordnung umfasst ferner Führungsteile, die jeweils an den Fensterscheiben befestigt sind. Darüber hinaus umfasst die Führungsanordnung Aufnahmen für die Führungsteile, die einen Aufnahmekanal aufweisen und jeweils mit wenigstens zwei Dichtlippen versehen sind, die elastisch verformbar ausgebildet sind. Überdies umfasst die Führungsanordnung starre Bauteile, die jeweils im Querschnitt etwa U-förmig ausgebildet sind und die zugeordneten Aufnahmen formschlüssig aufnehmen.

Das Führungsteil weist einen Vorsprung und einen an der Innenfläche der Fensterscheibe befestigten Befestigungsabschnitt auf. Der Vorsprung weist einen Führungsarm, der sich im Wesentlichen senkrecht zur Ebene der Fensterscheiben erstreckt, und einen Endabschnitt, der sich in einer im Wesentlichen parallel zur Ebene der Fensterscheiben verlaufenden Richtung erstreckt, auf. Der Führungsarm, der Endabschnitt und der Befestigungsabschnitt bilden einen Führungskanal für eine der Dichtlippen. Die Führungsteile sind in einer im Wesentlichen senkrecht zur Ebene der Fensterscheiben verlaufenden Richtung in die zugeordneten Aufnahmen derart eingeführt, dass eine der Dichtlippen in den Führungskanal eingreift und an dem Endabschnitt und/oder dem Führungsarm dichtend anliegt und die andere der Dichtlippen an einer der Innenfläche abgewandten Seite des Endabschnitts dichtend anliegt. Bei einer Bewegung der Fensterscheiben wird der Vorsprung in dem Aufnahmekanal durch die Dichtlippen geführt.

Unter dem Führungsteil im Sinne der vorliegenden Anmeldung wird ein Bauteil verstanden, welches geeignete Abmessungen aufweist, um mit der Aufnahme zur Führung der Fensterscheibe bei einem Heben und Senken der Fensterscheibe zusammen zu wirken. So ist das Führungsteil vorzugsweise als Ansatz, Vorsprung, Erhebung, Nase oder Finger ausgebildet. Dementsprechend ist die Aufnahme geeignet ausgebildet, um das Führungsteil in geeigneter Weise zu führen. Bevorzugt kann die Aufnahme zugleich eine Dichtfunktion übernehmen. Vorzugsweise ist die Aufnahme durch einen einseitig offenen Querschnitt, beispielsweise durch einen U-förmigen Querschnitt, gebildet.

Im Rahmen der vorliegenden Erfindung wird vorrangig eine erste Variante der Führungsanordnung beschrieben, bei der das Führungsteil an der Fensterscheibe befestigt ist. Alternativ gemäß einer zweiten Variante kann die Anordnung von Führungsteil und Aufnahme in dem Sinne umgekehrt werden, dass die Aufnahme an der Fensterscheibe befestigt ist. Die im Folgenden zu der erstgenannten Variante erläuterten bevorzugten Ausführungsformen sind im Hinblick auf die zweite Variante dementsprechend anzuwenden.

Mit der erfindungsgemäßen Lösung wird ein bündiger Übergang zwischen der Außenfläche der Fensterscheibe und einer äußeren Kante des anschlieβenden Dachrahmens und/oder ein bündiger Anschluss zweier nebeneinander und im Wesentlichen in einer Ebene angeordneter Fensterscheiben, wie beispielsweise bei den Fensterscheiben einer Vorder- und einer Hintertür eines Kraftfahrzeuges, ermöglicht. So kann beispielsweise zwischen den aneinander grenzenden Stirnflächen der Fensterscheiben ein kompakt gehaltenes Abstandsprofil und/oder eine oder mehrere Zierleisten angeordnet werden. Auch bei einer Anordnung solcher Zierleisten ermöglicht es die vorliegende Erfindung, einen bündigen Übergang zwischen den Außenflächen der vorderen und der hinteren Fensterscheibe sowie der dazwischen angeordneten Zierleisten zu ermöglichen. Auf diese Weise wird ein in ästhetischer Hinsicht ansprechenden äußeres Erscheinungsbild in Bereich der Vorder- und Hintertür geschaffen.

Ferner ermöglicht die erfindungsgemäße Ausgestaltung eine einfache Montage. So kann das Führungsteil in einer im Wesentlichen senkrecht zur Fensterscheibenebene verlaufenden Richtung in die Aufnahme eingeführt, eingeschoben, eingesteckt bzw. eingedrückt werden, das heißt, es ist kein aufwendiges Einfädeln der Fensterscheibe in einer parallel zur Fensterscheibenebene verlaufenden Richtung erforderlich. Auf diese Weise wird eine automatische Montage ermöglicht, so dass die Herstellungskosten reduziert werden können.

Erfindungsgemäß sind das Führungsteil und/oder die Aufnahme derart ausgebildet, dass das Führungsteil in einer Richtung im Wesentlichen senkrecht zur Ebene der Fensterscheibe in die Aufnahme einführbar ist. Mit anderen Worten kann hierfür eine entsprechende geometrische Formung der Aufnahme und/oder des Führungsteils vorgesehen werden und erlaubt vielfältige Querschnittsformen.

Erfindungsgemäß umfasst die Aufnahme einen Aufnahmekanal und das Führungsteil einen Vorsprung, der bei einer Bewegung der Fensterscheibe in den Aufnahmekanal geführt ist. Vorzugsweise ist der Vorsprung im Querschnitt T-förmig ausgebildet. Weiterhin bevorzugt ist der Vorsprung in Form eines sich entlang einer Längsrichtung erstreckenden Führungssteges ausgebildet. Beispielsweise weisen der Aufnahmekanal und der Führungssteg in etwa die gleiche Länge auf und sind im Wesentlichen in der Bewegungsrichtung der Scheibe ausgerichtet. Alternativ kann der Vorsprung auch in Längsrichtung mehrteilig aufgebaut sein.

Erfindungsgemäß weist der Vorsprung einen Führungsarm auf, der sich im Wesentlichen senkrecht zur Ebene der Fensterscheibe erstreckt.

Erfindungsgemäß weist der Vorsprung einen Endabschnitt auf, der sich in einer im Wesentlichen parallel zur Ebene der Fensterscheibe verlaufenden Richtung erstreckt. Bevorzugt bilden der Führungsarm und der Endabschnitt einen im Querschnitt T-förmigen Vorsprung. Der Endabschnitt kann wenigstens ein erstes Ende und ein zweites Ende aufweisen. Diese Enden können beispielsweise durch wenigstens eine an der Aufnahme angeordnete Dichtlippe hintergriffen werden.

Erfindungsgemäß stehen der Endabschnitt und/oder der Führungsarm bei der Führung des Führungsteils in der Aufnahme mit der Aufnahme in Kontakt.

Vorteilhafterweise weist das Führungsteil einen Befestigungsabschnitt auf, der stoffschlüssig und/oder formschlüssig mit der Fensterscheibe verbunden ist.

Um eine große Befestigungsfläche bereitstellen zu können, erstreckt sich der Befestigungsabschnitt vorteilhafterweise im Wesentlichen parallel zur Ebene der Fensterscheibe und/oder im Wesentlichen parallel zum Endabschnitt.

Der Befestigungsabschnitt ist an der Innenseite der Fensterscheibe befestigt, vorzugsweise angeklebt. Vorteilhafterweise ist der Befestigungsabschnitt vorzugsweise ausschließlich an der Innenseite der Fensterscheibe befestigt.

Bei einer bevorzugten Ausführungsform weist die Aufnahme einen U-förmigen Querschnitt mit wenigstens einer Basis und zwei Schenkeln auf. Erfindungsgemäß ist die Aufnahme mit einer Hohlkammer und/oder wenigstens einer Dichtlippe versehen. Auf diese Weise kann die Aufnahme zugleich eine Dichtfunktion übernehmen.

Erfindungsgemäß ist die wenigstens eine Dichtlippe mit dem Endabschnitt und/oder dem Führungsarm in Kontakt. Das Führungsteil ist derart geformt, dass es wenigstens einen Führungskanal für die wenigstens eine Dichtlippe bereitstellt.

Erfindungsgemäß ist die Aufnahme wenigstens abschnittsweise elastisch verformbar ausgebildet. Hierbei befinden sich die elastisch ausgebildeten Bereiche in denjenigen Bereichen, die mit dem Führungsteil zusammenwirken. Dabei handelt es sich um die Dichtlippe oder die Dichtlippen.

Vorzugsweise ist die Aufnahme aus einem elastomeren Werkstoff, vorzugsweise aus einem thermoplastischen Elastomer oder Ethylen-Propylen-Dien-Kautschuk extrudiert. Um geeignete Gleiteigenschaften bereitzustellen, ist die Aufnahme und insbesondere wenigstens eine der zugehörigen Dichtlippen mit einer reibungsvermindernden Beflockung oder Beschichtung versehen.

Eine bevorzugte Weiterbildung zeichnet sich durch eine Befestigungseinheit zur Befestigung der Aufnahme an einem starren Bauteil aus. Die Befestigungseinheit kann wenigstens einen Befestigungsclip und/oder eine Klebeschicht umfassen. Ein solcher Befestigungsclip weist beispielsweise einen Rastfuß und einen pilzartig geformten Kopf auf. Vorzugsweise ist der Befestigungsclip durch eine Lochung in der Aufnahme, insbesondere in der Basis, steckbar und an dem starren Bauteil verrastbar.

Um ein ansprechendes Erscheinungsbild zu schaffen, weist die Fensterscheibe auf der Außenseite oder Innenseite eine Dekorschicht, insbesondere einen Keramikaufdruck, auf. So kann eine zur Festlegung des Führungsteils an der Fensterscheibe auf den Befestigungsabschnitt des Führungsteils aufgebrachte Klebeschicht optisch verdeckt werden. Alternativ ist es auch möglich, die Fensterscheibe mit einem geätzten Bereich zu versehen.

Erfindungsgemäß umfasst die Führungsanordnung ein starres Bauteil, das im Querschnitt etwa U-förmig ausgebildet ist und zur Halterung der Aufnahme dient. Das starre Bauteil nimmt die Aufnahme formschlüssig auf. Das starre Bauteil kann mit einer Zierleiste versehen werden, um ein ansprechendes optisches Erscheinungsbild zu schaffen. Vorzugsweise wird das starre Bauteil durch einen Rahmenabschnitt einer Kraftfahrzeugtür gebildet.

Die erfindungsgemäße Führungsanordnung gestaltet sich derart, dass zur Führung einer ersten Fensterscheibe ein erstes Führungsteil und eine erste Aufnahme für das Führungsteil vorgesehen sind, wobei das erste Führungsteil an der ersten Fensterscheibe befestigt ist. Zudem sind zur Führung einer zweiten Fensterscheibe ein zweites Führungsteil und eine zweite Aufnahme für das zweite Führungsteil vorgesehen, wobei das zweite Führungsteil an der zweiten Fensterscheibe befestigt ist. Mit anderen Worten handelt es sich im Wesentlichen um eine Führungsanordnung mit zwei nebeneinander angeordneten Führungsanordnungen der oben beschriebenen Art.

Die Fensterscheiben erstrecken sich im Wesentlichen in einer Ebene, wobei die sich quer, insbesondere im Wesentlichen rechtwinklig, zu der Ebene erstreckenden und gegenüberliegenden Stirnflächen der Fensterscheiben in einem vorbestimmten Abstand beabstandet sind. Auf diese Weise wird ein bündiger Übergang zwischen den Fensterscheiben ermöglicht. Der Abstand zwischen den gegenüberliegenden Stirnflächen der Fensterscheiben beträgt weniger als 20 mm, insbesondere weniger als 10 mm. In weiter bevorzugter Ausgestaltung beträgt dieser Abstand weniger als 5 mm.

Eine weitere Ausgestaltung sieht vor, dass zwischen den beiden Fensterscheiben wenigstens eine Zierleiste vorgesehen ist, die sich im Wesentlichen in der Ebene erstreckt. Vorteilhafterweise liegen die Außenflächen der Fensterscheiben und der wenigstens einen Zierleiste in Wesentlichen in einer Ebene. Auf diese Weise wird ein bündiger Übergang zwischen der ersten und der zweiten Fensterscheibe erreicht. So kann ein Seitenbereich eines Kraftfahrzeugs derart gestaltet werden, dass die Fensterscheibe der Vordertür, die Fensterscheibe der Hintertür und etwaig dazwischen vorgesehene Zierleisten im Bereich der B-Säule mit ihren jeweiligen Außenflächen in einer Ebene zu liegen kommen.

Bei dem erfindungsgemäßen Verfahren zur Montage der Führungsanordnung, insbesondere zur Montage an einer Kraftfahrzeugtür, wird das Führungsteil oder die Aufnahme an der Fensterscheibe befestigt und das Führungsteil in eine im Wesentlichen senkrecht zur Ebene der Fensterscheibe verlaufende Richtung in die Aufnahme eingeführt.

Mit anderen Worten wird das Führungsteil zur gegenseitigen Positionierung von Führungsteil und Aufnahme derart, dass das Führungsteil bei einer Bewegung der Fensterscheibe in der Aufnahme geführt ist, zumindest abschnittsweise in diese im Wesentlichen senkrecht zur Ebene der Fensterscheibe verlaufende Richtung in die Aufnahme eingeführt, eingeschoben beziehungsweise gedrückt. Dabei ist es jedoch nicht erforderlich, dass der gesamte Eindrückvorgang in ausschließlich dieser Richtung abläuft, sondern ein Abschnitt des Eindrückweges kann auch in einer zu vorgenannter Richtung unterschiedlich ausgerichteten Richtung, beispielsweise in einer Richtung schräg zur Ebene der Fensterscheibe, verlaufen.

Erfindungsgemäß wird das Führungsteil derart in die Aufnahme eingeführt, dass wenigstens eine an der Aufnahme angeordnete Dichtlippe mit dem Führungsteil in Kontakt steht. Dies gilt insbesondere bei einer Bewegung der Fensterscheibe. So kann zugleich die Dichtfunktion erfüllt werden. Des Weiteren wird das Führungsteil derart in die Aufnahme eingeführt, dass sich die wenigstens eine Dichtlippe in einen durch das Führungsteil bereitgestellten beziehungsweise gebildeten Führungskanal erstreckt.

Um eine einfache Festlegung der Führungsanordnung zu ermöglichen, wird ein Befestigungsclip durch eine Lochung in der Aufnahme gesteckt und an einem starren Bauteil zur Befestigung der Aufnahme verrastet.

Nachfolgend wird die Erfindung unter Bezugnahme auf die Zeichnung weiter erläutert Dabei zeigen schematisch:
- Fig. 1 bis 5: mehrere Ansichten eines Kraftfahrzeugs mit einer erfindungs- gemäßen Führungsanordnung;

- Fig. 6: einen Querschnitt gemäß der strichpunktierten Linie IV-IV in Fig.4;
- Fig. 7: einen Querschnitt gemäß der strichpunktierten Linie VII-VII in Fig. 3;
- Fig. 8: einen vergrößerten Ausschnitt der mit VIII gekennzeichneten Stelle in Fig. 6' der einen Querschnitt durch die erfindungs- gemäße Führungsanordnung zeigt, und
- Fig. 9: einen Querschnitt gemäß der strichpunktierten Linie IX-IX in Fig.1.

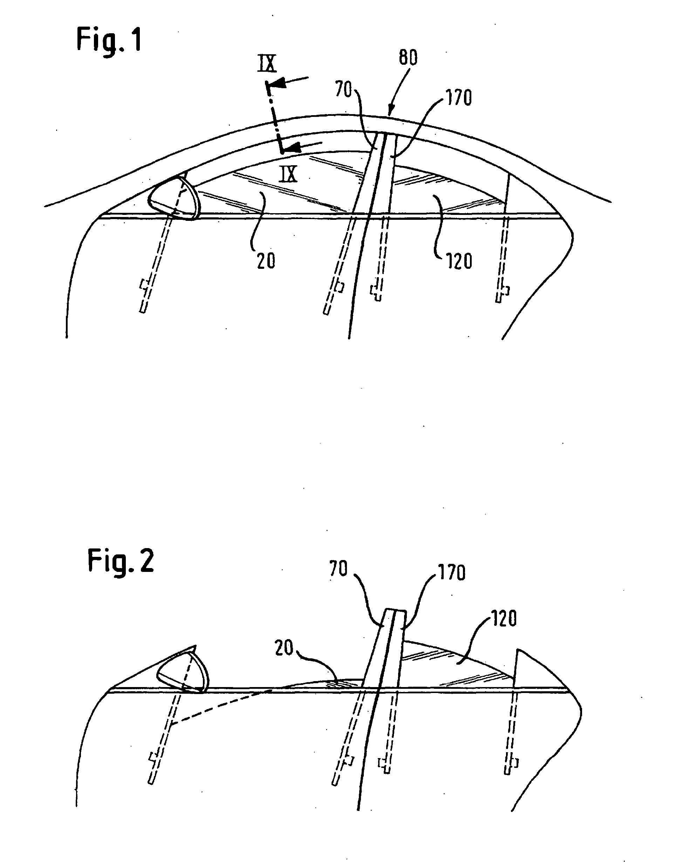

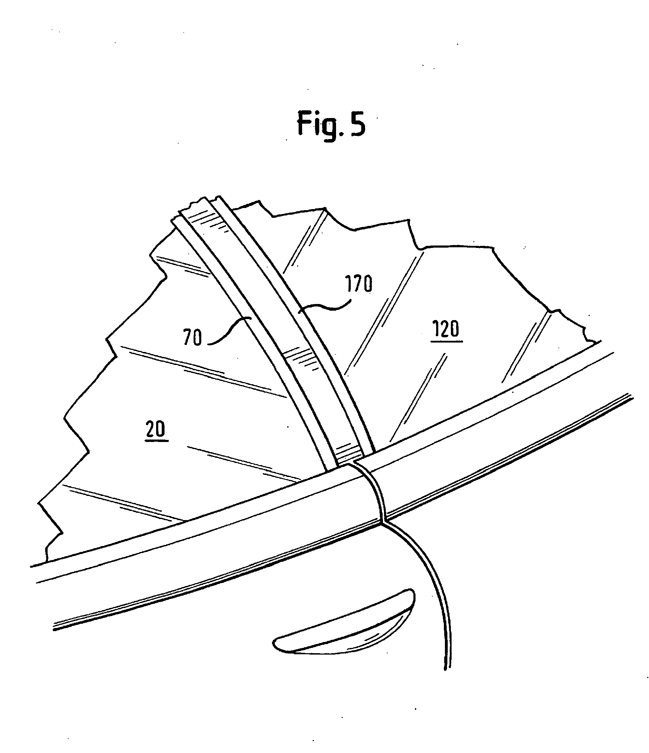

Die Figuren 1 bis 5 zeigen verschiedene Ansichten eines Kraftfahrzeugs mit einer Vorder- und einer Hintertür. Dabei umfasst die Vordertür eine Fensterscheibe 20 und einen Türrahmen in Form eines starren Bauteils 60. Die Hintertür umfasst eine Fensterscheibe 120 und einen Türrahmen in Form eines starren Bauteils 160. Ferner ist aus den Figuren eine B-Säule 80 zu erkennen.

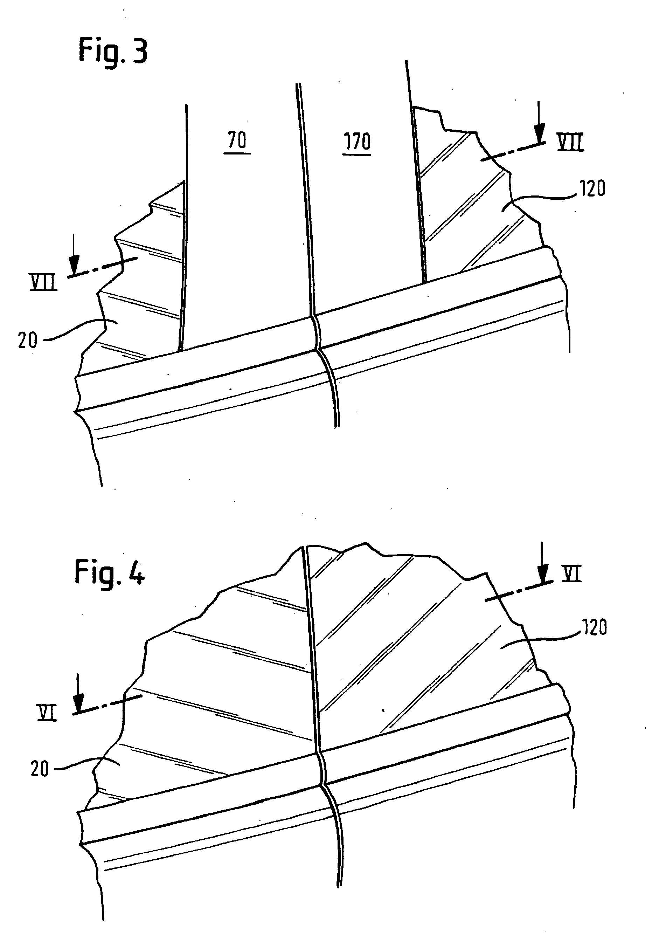

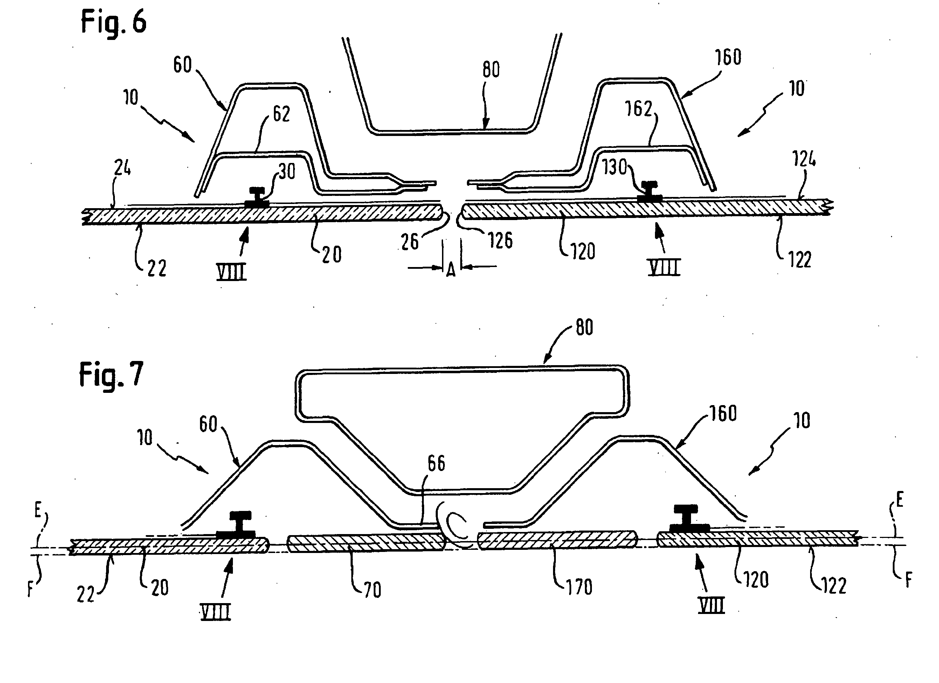

Wie insbesondere aus den Figuren 3 und 7 zu erkennen, sind bei einer ersten Variante die Fensterscheiben 20, 120 und die Zierleisten 70, 170 bündig ausgerichtet. Dabei erstrecken sich die Fensterscheiben 20, 120 und die Zierleisten 70, 170 im Wesentlichen in einer Ebene E, die sich im Wesentlichen in Vertikalrichtung erstreckt. Insbesondere sind die Außenflächen 22, 122 der Fensterscheiben 20, 120 und auch die Außenflächen der Zierleisten 70, 170 derart ausgerichtet, dass all diese Außenflächen sich entlang einer Ebene F erstrecken.

Eine zweite Variante gemäß den Figuren 4 und 6 unterscheidet sich zu der ersten Variante darin, dass keine Zierleisten zwischen den Fensterscheiben 20, 120 vorgesehen sind. Die Stirnflächen 26, 126 der beiden Fensterscheiben 20, 120 sind in einem Abstand A voneinander beabstandet, der beispielsweise kleiner als zehn Millimeter, insbesondere kleiner als fünf Millimeter beträgt.

Sowohl bei der Variante gemäß den Figuren 3 und 7 als auch bei der Variante gemäß den Figuren 4 und 6 sind die Türrahmen in Form der starren Bauteile 60, 160 und die B-Säule 80 derart zueinander angeordnet, dass die Fensterscheiben 20, 120 von der Außenseite des Kraftfahrzeugs betrachtet vor der B-Säule 80 verlaufen. Dadurch ergibt sich ein optisch ansprechendes Erscheinungsbild.

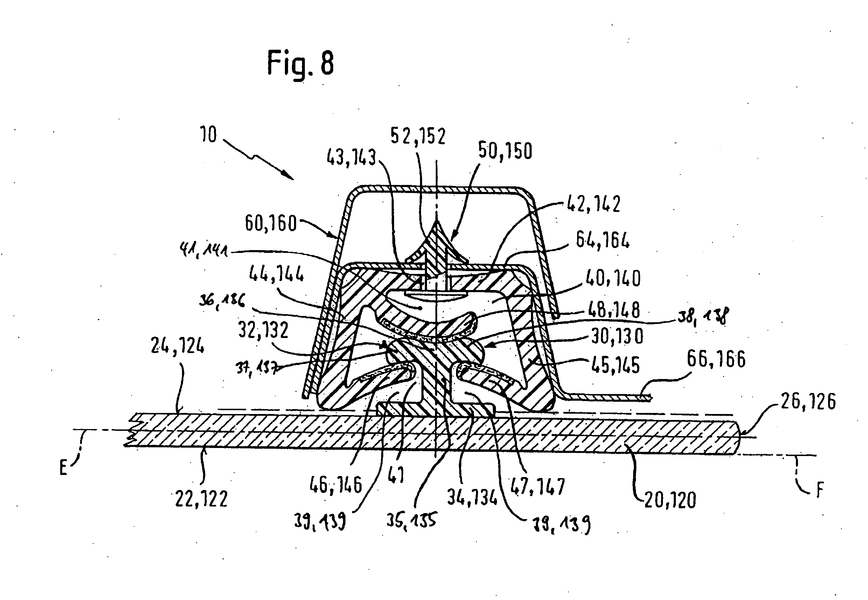

Zur Führung der Fensterscheiben 20, 120 ist jeweils eine Führungsanordnung 10 vorgesehen, die jeweils aus den gleichen Bestandteilen aufgebaut ist. Der Einfachheit halber wird im Folgenden die zur Führung der Fensterscheibe 20 dienende Führungsanordnung 10 anhand Fig. 8 näher erläutert:

Die Führungsanordnung umfasst ein Führungsteil 30 und eine Aufnahme 40 für das Führungsteil 30. Die Aufnahme 40 weist drei Dichtlippen 46, 47, 48 auf, die in der montierten Position dichtend an dem Führungsteil 30 anliegen.

Um eine einfache Montage des Führungsteils 30 und der Aufnahme 40 zu ermöglichen, sind diese beiden Bauteile derart ausgebildet, dass das Führungsteil 30 in einer Richtung im Wesentlichen senkrecht zur Ebene der Fensterscheibe 20 in die Aufnahme 40 einführbar ist.

Das Führungsteil 30 weist einen Vorsprung 32 auf, der sich im Wesentlichen in einer Richtung senkrecht zur Ebene der Fensterscheibe 20 erstreckt.

Dieser Vorsprung 32 umfasst einen Führungsarm 35 und einen Endabschnitt 36. Der Führungsarm 35 erstreckt sich im Wesentlichen in einer Richtung senkrecht zur Ebene der Fensterscheibe 20, wohingegen sich der Endabschnitt 36 in einer Richtung im Wesentlichen parallel zur Ebene der Fensterscheibe 20 erstreckt. Mit anderen Worten bilden Führungsarm 35 und Endabschnitt 36 einen T-förmigen Vorsprung 32. Der Endabschnitt 36 umfasst ein erstes Ende 37 und ein zweites Ende 38, die jeweils mit einem Ende an den Führungsarm 35 anschließen und wobei das jeweils andere Ende frei endet.

In der montierten Position von Führungsteil 30 und Aufnahme 40 ist der Endabschnitt 36 und/oder der Führungsarm 35 mit den Dichtlippen 46, 47, 48 der Aufnahme 40 in Kontakt. So erstreckt sich die Dichtlippe 46 in einen durch das erste Ende 37, den Führungsarm 35 und den Befestigungsabschnitt 34 gebildeten Führungskanal 39 und liegt dichtend an einer der Innenseite 24 zugewandten Seite des ersten Endes 37 an. Gleichermaßen erstreckt sich die Dichtlippe 47 in einen durch das zweite Ende 38, den Führungsarm 35 und den Befestigungsabschnitt 34 gebildeten Führungskanal 39 und liegt dichtend an einer der Innenseite 24 zugewandten Seite des zweiten Endes 38 an. Alternativ oder zusätzlich ist es aber auch möglich, dass wenigstens eine der Dichtlippen 46, 47 an dem Führungsarm 35 anliegt. Des Weiteren liegt die Dichtlippe 48 an der von der Innenseite 24 abgewandten Seite des Endabschnittes 36 an.

Der Befestigungsabschnitt 34 des Führungsteils 30 ist stoffschlüssig mit der Fensterscheibe 20 verbunden. Im Ausführungsbeispiel gemäß Fig. 8 ist der Befestigungsabschnitt 34 an der Innenseite 24 der Fensterscheibe 20 angeklebt und erstreckt sich im Wesentlichen parallel zur Ebene der Fensterscheibe 20 bzw. parallel zum Endabschnitt 36. An der Außenseite 22 der Fensterscheibe 20 ist im Bereich des Befestigungsabschnittes 34 ein Keramikaufdruck aufgebracht.

Die Aufnahme 40 bildet insgesamt einen Führungskanal 41 für das Führungsteil 30 und umfasst hierzu eine Basis 42 und zwei daran anschließende Schenkel 44, 45. An die zur Fensterscheibe 20 gerichteten Enden der Schenkel 44, 45 schließen die Dichtlippen 46, 47 an. Im Übergangsbereich zwischen den Schenkeln 44 und der Basis 42 schließt die weitere Dichtlippe 48 an.

Die aus einem elastisch verformbaren Material gebildete Aufnahme 40 ist formschlüssig in einem Rahmenabschnitt 62 des starren Bauteils 60 aufgenommen. Der Rahmenabschnitt 62 umfasst einen ersten Flanschabschnitt 64 und einen zweiten Flanschabschnitt 66. Ferner dient eine Lochung 43 in der Basis 42 dazu, eine Befestigungseinheit 50 in Form eines Befestigungsclip 52 in die Lochung 43 einzudrücken, so dass ein Rastfuß des Befestigungsclip 52 an dem Flanschabschnitt 64 verrastet. An den zweiten Flanschabschnitt 66 ist gemäß Fig. 7 die Zierleiste 70 mittelbar oder unmittelbar befestigbar.

Die Führungsanordnung 10 ermöglicht die bestimmungsgemäße Führung der bewegbaren Fensterscheibe 20 insbesondere dadurch, dass das an der Innenseite 24 angebrachte, vorzugsweise angeklebte, Führungsteil 30 über den Vorsprung 32 in dem Aufnahmekanal 41 geführt ist. Dabei liegen die Dichtlippen 46, 47, 48 dichtend an dem Vorsprung an und ermöglichen somit zugleich eine Dichtfunktion.

Die vorstehenden Ausführungen zur Führung der Fensterscheibe 20 dienende Führungsanordnung 10 gelten analog für die zur Führung der Fensterscheibe 120 dienende Führungsanordnung 10.

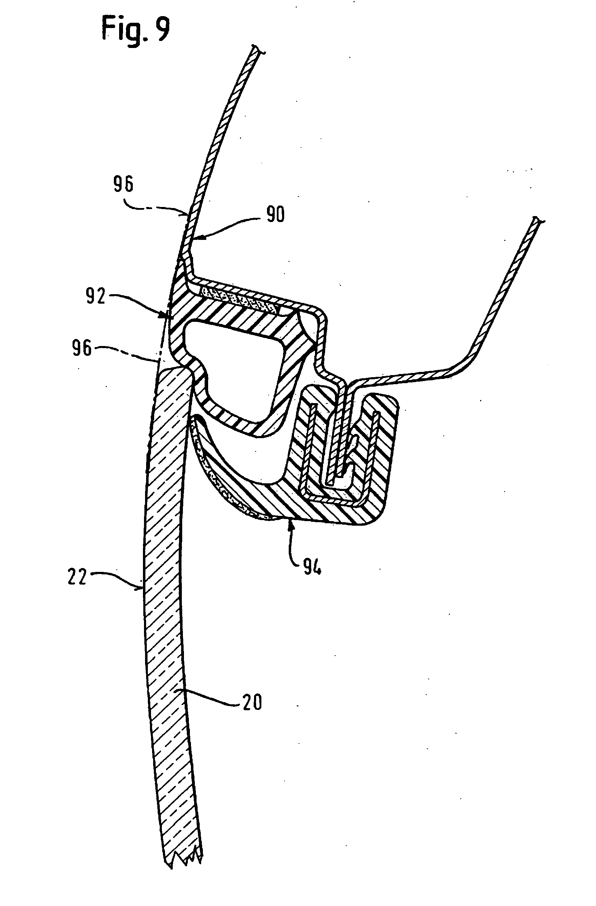

Fig. 9 zeigt schließlich einen Querschnitt durch den Anschlussbereich zwischen oberem Ende der Fensterscheibe 20 und einem Dachrahmen 90. Auch hier ergibt sich ein bündiger Übergang zwischen der Außenfläche 22 der Fensterscheibe 20 und der Außenkante 96 des Dachrahmens 90, an dem zwei Dichtungen 92, 94 vorgesehen sind.

### Bezugszeichenliste

- 10: Führungsanordnung

- 20: Fensterscheibe
- 22: Außenfläche
- 24: Innenfläche
- 26: Stirnfläche

- 30: Führungsteil
- 32: Vorsprung
- 34: Befestigungsabschnitt
- 35: Führungsarm
- 36: Endabschnitt
- 37: erstes Ende
- 38: zweites Ende
- 39: Führungskanal

- 40: Aufnahme
- 41: Kanal
- 42: Basis
- 43: Lochung
- 44: Schenkel
- 45: Schenkel
- 46: Dichtlippe
- 47: Dichtlippe
- 48: Dichtlippe

- 50: Befestigungseinheit

- 52: Befestigungsclip
- 60: starres Bauteil
- 62: Rahmenabschnitt
- 64: Flanschabschnitt
- 66: Flanschabschnitt

- 70: Zierleiste

- 80: B-Säule

- 90: Dachrahmen
- 92: Dichtung
- 94: Dichtung
- 96: Außenkante

- E: Ebene
- F: Ebene
- A: Abstand

- 120: Fensterscheibe
- 122: Außenfläche
- 124: Innenfläche
- 126: Stirnfläche

- 130: Führungsteil
- 132: Vorsprung
- 134: Befestigungsabschnitt

- 135: Führungsarm
- 136: Endabschnitt
- 137: erstes Ende
- 138: zweites Ende
- 139: Führungskanal

- 140: Aufnahme
- 141: Kanal
- 142: Basis
- 143: Lochung
- 144: Schenkel
- 145: Schenkel
- 146: Dichtlippe
- 147: Dichtlippe
- 148: Dichtlippe

- 150: Befestigungseinheit
- 152: Befestigungsclip
- 154: Klebeschicht

- 160: starres Bauteil
- 162: Rahmenabschnitt
- 164: Flanschabschnitt
- 166: Flanschabschnitt
- 170: Zierleiste

## Patentansprüche

1. Führungsanordnung (10) für Fensterscheiben (20, 120) eines Kraftfahrzeugs mit
einer ersten bewegbaren Fensterscheibe (20), die eine Außenfläche (22), eine Innenfläche (24) und eine Stirnfläche (26) aufweist, und einer zweiten bewegbaren Fensterscheibe (120), die eine Außenfläche (122), eine Innenfläche (124) und eine Stirnfläche (126) aufweist, wobei sich die Fensterscheiben (20, 120) im Wesentlichen in einer Ebene (E) erstrecken und wobei die Stirnfläche (26) der ersten Fensterscheibe (20) und die Stirnfläche (126) der zweiten Fensterscheibe (120) einander gegenüberliegen und in einem Abstand (A) voneinander angeordnet sind;
einem ersten Führungsteil (30), das an der ersten Fensterscheibe (20) befestigt ist, und einem zweiten Führungsteil (130), das an der zweiten Fensterscheibe (120) befestigt ist;
einer ersten Aufnahme (40) für das erste Führungsteil (30), die einen Aufnahmekanal (41) aufweist, und einer zweiten Aufnahme (140) für das zweite Führungsteil (130), die einen Aufnahmekanal (141) aufweist, wobei die Aufnahmen (40, 140) jeweils wenigstens zwei Dichtlippen (46, 146; 47, 147; 48, 148) umfassen, die elastisch verformbar ausgebildet sind;
einem ersten starren Bauteil (60), das im Querschnitt etwa U-förmig ausgebildet ist und die erste Aufnahme (40) formschlüssig aufnimmt, und einem zweiten starren Bauteil (160), das im Querschnitt etwa U-förmig ausgebildet ist und die zweite Aufnahme (140) formschlüssig aufnimmt;
wobei das Führungsteil (30, 130) einen Vorsprung (32, 132) und einen an der Innenfläche (24, 124) der Fensterscheibe (20, 120) befestigten Befestigungsabschnitt (34, 134) aufweist;
wobei der Vorsprung (32, 132) einen Führungsarm (35, 135), der sich im Wesentlichen senkrecht zur Ebene (E) der Fensterscheiben (20, 120) erstreckt, und einen Endabschnitt (36, 136), der sich in einer im Wesentlichen parallel zur Ebene (E) der Fensterscheiben (20, 120) verlaufenden Richtung erstreckt, aufweist;
wobei der Führungsarm (35, 135), der Endabschnitt (36, 136) und der Befestigungsabschnitt (34, 134) einen Führungskanal (39, 139) für eine der Dichtlippen (46, 146; 47, 147) bilden;
wobei die Führungsteile (30, 130) in einer im Wesentlichen senkrecht zur Ebene (E) der Fensterscheiben (20, 120) verlaufenden Richtung in die zugeordneten Aufnahmen (40, 140) derart eingeführt sind, dass eine der Dichtlippen (46, 146; 47, 147) in den Führungskanal (39, 139) eingreift und an dem Endabschnitt (36, 136) und/oder dem Führungsarm (35, 135) dichtend anliegt und die andere der Dichtlippen (48, 148) an einer der Innenfläche (24, 124) abgewandten Seite des Endabschnitts (36, 136) dichtend anliegt, und
wobei bei einer Bewegung der Fensterscheiben (20, 120) der Vorsprung (32, 132) in dem Aufnahmekanal (41, 141) durch die Dichtlippen (46, 146; 47, 147; 48, 148) geführt ist.

2. Führungsanordnung nach Anspruch 1, **dadurch gekennzeichnet, dass** der Führungsarm (35, 135) und der Endabschnitt (36, 136) einen im Querschnitt T-förmigen Vorsprung (32, 132) bilden.

3. Führungsanordnung nach Anspruch 1 oder 2, **dadurch gekennzeichnet, dass** sich der Befestigungsabschnitt (34, 134) im Wesentlichen parallel zur Ebene (E) der Fensterscheiben (20, 120) und/oder im Wesentlichen parallel zum Endabschnitt (36, 136) erstreckt, wobei vorzugsweise der Befestigungsabschnitt (34, 134) an der Innenfläche (24, 124) der Fensterscheiben (20, 120) befestigt, vorzugsweise verklebt, ist.

4. Führungsanordnung nach einem der Ansprüche 1 bis 3, **dadurch gekennzeichnet, dass** die Aufnahme (40, 140) einen U-förmigen Querschnitt mit wenigstens einer Basis (42, 142) und zwei Schenkeln (44, 45, 144, 145) aufweist.

5. Führungsanordnung nach einem der Ansprüche 1 bis 4, **dadurch gekennzeichnet, dass** die Dichtlippen (46, 146; 47, 147; 48, 148) mit einer reibungsvermindernden Beflockung oder Beschichtung versehen sind.

6. Führungsanordnung nach einem der Ansprüche 1 bis 5, **dadurch gekennzeichnet, dass** die Aufnahme (40, 140) aus einem elastomeren Werkstoff, vorzugsweise aus einem thermoplastischen Elastomer oder Ethylen-Propylen-Dien-Kautschuk, extrudiert ist.

7. Führungsanordnung nach einem der Ansprüche 1 bis 6, **gekennzeichnet durch** eine Befestigungseinheit (50, 150) zur Befestigung der Aufnahme (40, 140) an dem starren Bauteil (60, 160), wobei vorzugsweise die Befestigungseinheit (50, 150) wenigstens einen Befestigungsclip (52, 152) und/oder eine Klebeschicht umfasst und wobei vorzugsweise der Befestigungsclip (52, 152) **durch** eine Lochung (43, 143) in der Aufnahme (40, 140), insbesondere in der Basis (42, 142), steckbar und an dem starren Bauteil (60, 160) verrastbar ist.

8. Führungsanordnung nach einem der Ansprüche 1 bis 7, **dadurch gekennzeichnet, dass** die Fensterscheiben (20, 120) auf der Außenfläche (22, 122) oder der Innenfläche (24, 124) eine Dekorschicht, insbesondere einen Keramikaufdruck, aufweisen.

9. Führungsanordnung nach einem der Ansprüche 1 bis 8, **dadurch gekennzeichnet, dass** das starre Bauteil (60, 160) mit einer Zierleiste (70, 170) versehen ist.

10. Führungsanordnung nach Anspruch 9, **dadurch gekennzeichnet, dass** die Zierleiste (70, 170) zwischen den Fensterscheiben (20, 120) angeordnet ist und sich im Wesentlichen in der Ebene (E) der Fensterscheiben (20, 120) erstreckt, wobei vorzugsweise die Außenflächen (22, 122) der Fensterscheiben (20, 120) und die Außenfläche der Zierleiste (60, 160) im Wesentlichen in einer Ebene (F) liegen.

11. Führungsanordnung nach einem der Ansprüche 1 bis 10, **dadurch gekennzeichnet, dass** der Abstand (A) weniger als 20 mm, vorzugsweise weniger als 10 mm, beträgt.

12. Verfahren zur Montage einer Führungsanordnung (10) nach einem der Ansprüche 1 bis 11, **dadurch gekennzeichnet, dass** das Führungsteil (30, 130) in eine im Wesentlichen senkrecht zur Ebene (E) der Fensterscheiben (20, 120) verlaufenden Richtung in die Aufnahme (40, 140) eingeführt wird, wobei das Führungsteil (30, 130) derart in die Aufnahme (40, 140) eingeführt wird, dass eine der Dichtlippen (46, 146; 47, 147) in den Führungskanal (39, 139) eingreift und an dem Endabschnitt (36, 136) und/oder dem Führungsarm (35, 135) dichtend anliegt und die andere der Dichtlippen (48, 148) an einer der Innenfläche (24, 124) abgewandten Seite des Endabschnitts (36, 136) dichtend anliegt.

13. Verfahren nach Anspruch 12, **dadurch gekennzeichnet, dass** der Befestigungsclip (52, 152) durch die Lochung (43, 143) in der Aufnahme (40, 140) gesteckt und an dem starren Bauteil (60, 160) zur Befestigung der Aufnahme (40, 140) verrastet wird.

## Claims

1. Guide arrangement (10) for window panes (20, 120) of a motor vehicle with
a first movable window pane (20) having an outer surface (22) an inner surface (24) and an end face (26), and a second movable window pane (120) having an outer surface (122) an inner surface (124) and an end face (126), wherein the window panes extend essentially in one plane (E) and wherein the end face (26) of the first window pane (20) and the end face (126) of the second window pane (120) are arranged opposite, and at a distance from, one another;
a first guide part (30) fastened to the first window pane (20) and a second guide part (130) fastened to the second window pane (120);
a first receptacle (40) for the first guide part (30) having a receiving channel (41), and a second receptacle (140) for the second guide part (130) having a receiving channel (141) wherein the receptacles (40, 140) each have at least two sealing lips (46, 146; 47, 147; 48, 148) that are configured in an elastically deformable way;
a first rigid constructional part (60) which is approximately U-shaped in cross-section in which the first receptacle (40) is positively accommodated and a second rigid constructional part (160) which is approximately U-shaped in cross-section in which the second receptacle (140) is positively accommodated;
wherein the guide part (30, 130) has a projection (32, 132) and a fastening section (34, 134), the said fastening section being attached to the inner surface (24, 124) of the window pane (20, 120);
wherein the projection (32, 132) consists of a guiding arm (35, 135), extending essentially perpendicular to the surface plane (E) of the window pane (20, 120), and an end section (36, 136), extending in a direction that is essentially parallel to the surface plane (E) of the window pane (20, 120);
wherein the guiding arm (35, 135), the end section (36, 136) and the fastening section (34, 134) form a guide channel (39, 139) for one of the sealing lips (46, 146; 47, 147);
wherein the guide parts (30, 130) are introduced into the corresponding receptacles (40, 140) in a direction that is essentially perpendicular to the surface plane (E) of the window panes (20, 120) so that one of the sealing lips (46, 146; 47, 147) engages in the guide channel (39, 139) and forms a seal against the end section (36, 136) and/or against the guiding arm (35, 135), and the other of the sealing lips (48, 148) forms a seal against the side of the end section (36, 136) facing away from the window's inner surface (24, 124), and
wherein, upon movement of the window pane (20, 120), the projection (32, 132) is guided along the guide channel (41, 141) by the sealing lips (46, 146; 47, 147; 48, 148).

2. Guide arrangement according to Claim 1 **characterised in that** the guide arm (35, 135) and the end section (36, 136) form a projection with a T-shaped cross-section (32, 132).

3. Guide arrangement according to claim 1 or 2 **characterised in that** the fastening section (34, 134) extends essentially parallel to the surface plane (E) of the window panes (20, 120) and/or essentially parallel to the end section (36, 136) wherein preferably the fastening section (34, 134) is attached, preferably glued, to the inner surface (24, 124) of the window panes (20, 120).

4. Guide arrangement according to one of the claims 1 to 3 **characterised in that** the receptacle (40, 140) has a U-shaped cross-section with at least one base (42, 142) and two limbs (44, 144).

5. Guide arrangement according to one of the claims 1 to 4 **characterised in that** the sealing lips (46, 146, 47, 147, 48, 148) are provided with a friction-reducing flocking or coating.

6. Guide arrangement according to one of the claims 1 to 5 **characterised in that** the receptacle (40, 140) is extruded from an elastomer material, preferably from a thermoplastic elastomer or ethylene-propylene-diene rubber.

7. Guide arrangement according to one of the claims 1 to 6 **characterised by** a fastening unit (50, 150) for securing the receptacle (40, 140) on the rigid constructional part (60, 160) wherein preferably the fastening unit (50, 150) has at least one fastening clip (52, 152) and/or a glue coating and wherein preferably the fastening clip (52, 152) can be pushed into a hole (43, 143) in the receptacle (40, 140) in particular in the base (42, 142) and can be latched into the rigid constructional part (60, 160).

8. Guide arrangement according to one of the claims 1 to 7 **characterised in that** the window panes (20, 120) are provided on their outer surface (22, 122) or on their inner surface (24, 124) with a decorative coating, in particular with a ceramic print.

9. Guide arrangement according to one of the claims 1 to 8 **characterised in that** the rigid constructional part (60, 106) is provided with a trim strip (70, 170).

10. Guide arrangement according to one of the claims 1 to 9 **characterised in that** the trim strip (70, 170) is arranged between the window panes (20, 120) and extends essentially in the same plane (E) as the window panes (20, 120) wherein preferably the outer surfaces (22, 122) of the window panes (20, 120) and the outer surface of the trim (70, 170) are essentially in the same plane (F).

11. Guide arrangement according to one of the claims 1 to 10 **characterised in that** the distance (A) is less than 20 mm, preferably less than 10 mm.

12. Method for assembling a guide arrangement (10) according to one of the claims 1 to 11 **characterised in that** the guide part (30, 130) is introduced into the receptacle (40, 140) in a direction essentially perpendicular to the level (E) of the window panes (20, 120), wherein the guide part (30, 130) is introduced into the receptacle (40, 140) so that one of the sealing lips (46, 146; 47, 147) engages in the guide channel (39, 139) and seals against the end section (36, 136) and/or the guiding arm (35, 135) and the other of the sealing lips (48, 148) seals against the side of the end section (36, 136) which faces away from the window's inner surface (24, 124).

13. Method according to Claim 12 **characterised in that** the fastening clip (52, 152) is pushed into the hole (43, 143) in the receptacle (40, 140) and latches into the rigid constructional part (60, 160) to secure the receptacle (40, 140).

## Revendications

1. Agencement de guidage (10) pour des vitres de fenêtre (20, 120) d'un véhicule automobile, comprenant
une première vitre de fenêtre mobile (20), qui présente une face extérieure (22), une face intérieure (24) et une face frontale (26), et une seconde vitre de fenêtre mobile (120), qui présente une face extérieure (122), une face intérieure (124) et une face frontale (126), dans lequel les vitres de fenêtre (20, 120) s'étendent sensiblement dans un plan (E), et la face frontale (26) de la première vitre de fenêtre (20) et la face frontale (126) de la seconde vitre de fenêtre (120) sont agencées une en face de l'autre et à distance (A) l'une de l'autre ;
une première partie de guidage (30) qui est fixée sur la première vitre de fenêtre (20), et une seconde partie de guidage (130) qui est fixée sur la seconde vitre de fenêtre (120) ;
un premier logement (40) pour la première partie de guidage (30), qui comporte un canal de réception (41), et un second logement (140) pour la seconde partie de guidage (130) qui comporte un canal de réception (141), lesdits logements (40, 140) comprenant chacun au moins deux lèvres d'étanchéité (46, 146 ; 47, 147 ; 48, 148) qui sont réalisées de manière élastiquement déformable ;
un premier composant rigide (60), qui est réalisé avec une section approximativement en forme de U et qui reçoit le premier logement (40) en coopération de formes, et un second composant rigide (160), qui est réalisé avec une section approximativement en forme de U et qui reçoit le second logement (140) en coopération de formes ;
dans lequel ladite partie de guidage (30, 130) comprend une saillie (32, 132) et un tronçon de fixation (34, 134) fixé sur la face intérieure (24, 124) de la vitre de fenêtre (20, 120) ;
dans lequel la saillie (32, 132) comprend un bras de guidage (35, 135) qui s'étend sensiblement perpendiculairement au plan (E) des vitres de fenêtre (20, 120), et un tronçon terminal (36, 136) qui s'étend dans une direction sensiblement parallèle au plan (E) des vitres de fenêtre (20, 120) ;
dans lequel le bras de guidage (35, 135), le tronçon terminal (36, 136) et le tronçon de fixation (34, 134) forment un canal de guidage (39, 139) pour l'une des lèvres d'étanchéité (46, 146 ; 47, 147) ;
dans lequel les parties de guidage (30, 130) sont introduites dans les logements associés (40, 140), dans une direction sensiblement perpendiculaire au plan (E) des vitres de fenêtre (20, 120), de telle façon que l'une des lèvres d'étanchéité (46, 146 ; 47, 147) s'engage dans le canal de guidage (39, 139) et s'applique de façon étanche contre le tronçon terminal (36, 136) et/ou contre le bras de guidage (35, 135), et l'autre des lèvres d'étanchéité (48, 148) s'applique de façon étanche contre un côté, détourné de la face intérieure (24, 124), du tronçon terminal (36, 136), et
dans lequel, lors d'un déplacement des vitres de fenêtre (20, 120), la saillie (32, 132) est guidée dans le canal de réception (41, 141) par les lèvres d'étanchéité (46, 146 ; 47, 147 ; 48, 148).

2. Agencement de guidage selon la revendication 1, **caractérisé en ce que** le bras de guidage (35, 135) et le tronçon terminal (36, 136) forment une saillie (32, 132) à section en forme de T.

3. Agencement de guidage selon la revendication 1 ou 2, **caractérisé en ce que** le tronçon de fixation (34, 134) s'étend sensiblement parallèlement au plan (E) des vitres de fenêtre (20, 120) et/ou sensiblement parallèlement au tronçon terminal (36, 136), et de préférence le tronçon de fixation (34, 134) est fixé contre la face intérieure (24, 124) des vitres de fenêtre (20, 120), de préférence collé.

4. Agencement de guidage selon l'une des revendications 1 à 3, **caractérisé en ce que** le logement (40, 140) présente une section en forme de U avec au moins une base (42, 142) et deux branches (44, 45, 144, 145).

5. Agencement de guidage selon l'une des revendications 1 à 4, **caractérisé en ce que** les lèvres d'étanchéité (46, 146 ; 47, 147 ; 48, 148) sont dotées d'un flocage ou d'un revêtement réduisant la friction.

6. Agencement de guidage selon l'une des revendications 1 à 5, **caractérisé en ce que** le logement (40, 140) est extrudé en un matériau élastomère, de préférence en un élastomère thermoplastique ou un caoutchouc éthylène-propylène-diène.

7. Agencement de guidage selon l'une des revendications 1 à 6, **caractérisé par** une unité de fixation (50, 150) pour la fixation des logements (40, 140) sur le composant rigide (60, 160), dans lequel de préférence l'unité de fixation (50, 150) comprend au moins une pince de fixation (52, 152) et/ou une couche de colle, et dans lequel de préférence la pince de fixation (52, 152) peut être enfichée à travers un trou (43, 143) dans le logement (40, 140), en particulier dans la base (42, 142) et être enclenchée sur le composant rigide (60, 160).

8. Agencement de guidage selon l'une des revendications 1 à 7, **caractérisé en ce que** les vitres de fenêtre (20, 120) comportent une couche décorative, en particulier une impression céramique, sur la face extérieure (22, 122) ou sur la face intérieure (24, 124).

9. Agencement de guidage selon l'une des revendications 1 à 8, **caractérisé en ce que** le composant rigide (60, 160) est doté d'un enjoliveur (70, 170).

10. Agencement de guidage selon la revendication 9, **caractérisé en ce que** l'enjoliveur (70, 170) est agencé entre les vitres de fenêtre (20, 120) et s'étend sensiblement dans le plan (E) des vitres de fenêtre (20, 120), dans lequel de préférence les faces extérieures (22, 122) des vitres de fenêtre (20, 120) et la face extérieure de l'enjoliveur (70, 170) sont situées sensiblement dans un plan (F).

11. Agencement de guidage selon l'une des revendications 1 à 10, **caractérisé en ce que** la distance (A) est inférieure à 20 mm, de préférence inférieure à 10 mm.

12. Procédé pour le montage d'un agencement de guidage (10) selon l'une des revendications 1 à 11, **caractérisé en ce que** la partie de guidage (30, 130) est introduite dans le logement (40, 140) dans une direction s'étendant sensiblement perpendiculairement au plan (E) des vitres de fenêtre (20, 120), dans lequel la partie de guidage (30, 130) est introduite dans le logement (40, 140) de telle manière que l'une des lèvres d'étanchéité (46, 146 ; 47, 147) s'engage dans le canal de guidage (39, 139) et s'applique de façon étanche contre le tronçon terminal (36, 136) et/ou le bras de guidage (35, 135), et que l'autre des lèvres d'étanchéité (48, 148) s'applique de façon étanche sur un côté détourné de la face intérieure (24, 124)., du tronçon terminal (36, 136).

13. Procédé selon la revendication 12, **caractérisé en ce que** la pince de fixation (52, 152) est enfichée dans le logement (40, 140) à travers le trou (43, 143) et est enclenchée sur le composant rigide (60, 160) pour la fixation du logement (40, 140).
